# EUROPEAN PATENT APPLICATION

(11) **EP 2 784 185 A1**
(43) Date of publication of application: **01.10.2014**
(21) Application number: 13161321.8
(22) Date of filing: 27.03.2013
(51) Int. Cl.: C23G 1/36, C01B 21/38, C01B 7/19, C01B 13/18

(54) **Process for recovering acids from a spent acid solution containing metal salts**

(71) Applicant: CMI UVK GmbH, 56410 Montabaur (DE)
(72) Inventor: Sehner, Egon, 56235 Ransbach-Baumbach (DE); Faber, Sergej, 65594 Runkel (DE); Marx, Thomas, 56427 Siershahn (DE)
(74) Representative: Schwöbel, Thilo K.

(57) **Abstract**

The present invention relates to a process for recovering acids from a spent acid solution containing metal salts, the process comprising the steps of:
-- providing a heated reactor which is split, by built-in parts, into a first reaction zone and a separate second reaction zone immediately adjoining the first reaction zone,
-- feeding a spent acid solution into the first reaction zone of the reactor,
-- heating the spent acid solution in the first reaction zone at a first temperature sufficient for evaporation of the water from the acid solution and for pyrolytic decomposition into acid vapours and metal oxides, wherein a reaction takes place in the first reaction zone at the first temperature, wherein the first temperature is between 250 °C and 650°C, wherein a final reaction takes place in the second reaction zone at a second temperature, wherein the second temperature is lower than the first temperature,
-- recovering and regenerating an acid solution from the acid vapours.

## Description

### BACKGROUND

The present invention relates to a process for recovering acids from a spent acid solution containing metal salts, wherein a heated reactor is provided, which is split, by built-in parts, into a first reaction zone and a separate second reaction zone immediately adjoining the first reaction zone and wherein the spent acid solution is fed into the first reaction zone of the reactor.

In pickling processes, metal surfaces are treated by removing impurities such as stains, inorganic contaminants, rust or scale using pickle liquors containing strong acids. These impurities may occur during metal forming processes, in particular rolling and/or heat treatment. To this end, strong acids, also called pickle liquor, are used to descale or clean the metal surfaces. For example nitric acid, hydrofluoric acid or mixtures of different acids may be used as pickling agents for pickling of ferrous metals, copper or aluminium alloys. The large amounts of spent acids are not only hazardous to the environment but usually also expensive. Thus it is desirable to regenerate the spent acids for reuse in various processes.

When acids are regenerated from metal ferrous solutions of acids or spent acids by spray rosting, the spent acids are typically atomized or sprayed into a heated reactor. To this end, fine droplets are generated at a top section of the reactor and fall freely to a lower section in the reactor while being heated by heating elements disposed in the reactor. Due to the free fall of the droplets, the spray rosting needs to be accomplished within seconds, wherein a pyrolytic decomposition of the droplets into vapour acids and metal oxides takes place. By spraying the spent acid through a furnace the various components are pyrolyzed or roasted to produce metal oxides and acid vapours. The acid vapours flow to the top section of the reactor and are withdrawn for a further acid regeneration step. The vapours are then directed through an absorption column, where regenerated acid is discharged from the column and may be reused in the pickling process. However, the acid regeneration usually involves the production of large amounts of hazardous waste water, which should be avoided.

During the spray rosting, the decomposed metal oxides fall to the bottom section. Due to the short retention time in the reactor, residual acids remain bonded to the metal oxide, which results in a poor quality of the metal oxide. On the other hand, if the temperature is increased in the reactor such that no residual acids remain bonded, the quality of the metal oxides may worsen due to overheating. This problem may be overcome with very complicated constructions of reactors such that the evaporation step is conducted prior to the oxidation or decomposition step. Thus, the known processes involve either complicated reactor constructions with high emission values or the production of metal oxides of relative low quality. Furthermore, large amounts of hazardous waste water are produced during the acid regeneration.

### SUMMARY

It is therefore an object of the present invention to provide a simplified acid regeneration process yielding a good quality of metal oxides, high recovery efficiencies and a significant reduction of hazardous waste.

The object of the present invention is achieved by a process for recovering acids from a spent acid solution containing metal salts, the process comprising the steps of:
- providing a heated reactor which is split, by built-in parts, into a first reaction zone and a separate second reaction zone immediately adjoining the first reaction zone,
- feeding a spent acid solution into the first reaction zone of the reactor,
- heating the spent acid solution in the first reaction zone at a first temperature sufficient for evaporation of the water from the acid solution and for pyrolytic decomposition into acid vapours and metal oxides, wherein a reaction takes place in the first reaction zone at the first temperature, wherein the first temperature is between 250 °C and 650°C, wherein a final reaction takes place in the second reaction zone at a second temperature, wherein the second temperature is lower than the first temperature,
- recovering and regenerating an acid solution from the acid vapours.

According to the present invention, it is thereby advantageously possible to remove residual acids bonded to the metal oxides in the final reaction zone such that the quality of the metal oxides produced during the spray rosting is improved. In particular, the spray rosting including the evaporation and oxidation steps can be performed in a single step in the first reaction zone of the reactor. Thus, no further reaction zone with further heating elements is needed for the evaporation step. The present invention provides a process with low emission values, wherein the recovery rate of the acids is higher than 99 percent. Additionally, the higher temperature in the first reaction zone as compared to the lower temperature in the final reaction zone allows the production of very pure metal oxides. Hereinafter the spent acid or spent acid solution is also called aqueous solutions of metal compounds or metal ferrous solutions of acids. Moreover, by adjusting the temperature to a value that is sufficient for the decomposition, overheating of the metal oxides is advantageously avoided such that the quality of the metal oxides is further improved.

According to a preferred embodiment of the present invention, the first temperature in the first reaction zone is 650 °C.

According to the present invention, it is thereby advantageously possible to remove residual acids bonded to the metal oxides in the final reaction zone such that the quality of the metal oxides produced during the spray rosting is improved. Thus, very pure metal oxides are produced by simultaneously evaporation and pyrolytic decomposition of the spent liquid droplets into acid vapours and metal oxides in a single step in the first reaction zone.

According to a preferred embodiment of the present invention, the second temperature in the final reaction zone is between 400 °C and 500 °C. More preferably, the second temperature in the final reaction zone is 430 °C. It is further preferred according to the present invention, that the second temperature in the final reaction zone is at least 50 °C lower than the first temperature in the first reaction zone.

According to the present invention, it is thereby advantageously possible to remove residual acids bonded to the metal oxides such that the quality of the metal oxides is further improved in the final reaction zone. It is furthermore advantageously possible to produce very pure metal oxides in a single step of evaporation and pyrolytic decomposition in the first reaction zone, because the residual acids bonded to the metal oxides removed in the second reaction zone.

According to a preferred embodiment of the present invention, the final reaction in the final reaction zone is an oxidation at a retention time of less than ten minutes.

According to the present invention, it is thereby advantageously possible to further improve the quality of the metal oxide by removing residual acids bonded to the metal oxides within a relative short retention time. In this way, the acid regeneration process can be performed with a high throughput speed.

According to a preferred embodiment of the present invention, the process comprises the further step of:
- feeding the acid vapour from the first reaction zone to an acid absorption column and absorbing the acid vapour to produce regenerated acid.

According to the present invention, it is thereby advantageously possible to provide a process that allows for the regeneration of acids from the spent acids such that the acids may be reused in the pickling process. Additionally, it is advantageously possible to adjust the concentration of the regenerated acid.

According to a preferred embodiment of the present invention, the acid vapour is adiabatically absorbed in the absorption column.

According to the present invention, it is thereby advantageously possible to forgo further modules in the regeneration apparatus, for example heat exchangers. Thus, the process is further simplified.

According to a preferred embodiment of the present invention, acid vapour fed into the absorption column is scrubbed in the absorption column by feeding water into the absorption column.

According to the present invention, it is thereby advantageously possible to reduce the air pollution to a minimum by scrubbing the exhaust gases.

According to a preferred embodiment of the present invention, waste water is recovered from the absorption column and fed back into the absorption column for scrubbing the acid vapours.

According to the present invention, it is thereby advantageously possible to provide a process for the regeneration of spent acids, wherein the hazards to the environment are significantly reduced. In particular, with the inventive process it is possible to regenerate acids from spent acids without producing waste water. Thus, with the inventive process acids are regenerated for reuse in pickling processes in an economically and ecologically improved fashion.

According to a preferred embodiment of the present invention, metal oxides from the first reaction zone are fed through an opening into the second reaction zone.

According to the present invention, it is thereby advantageously possible to provide a compact and small device, wherein the first reaction zone and the final reaction zone are integrated into a single reactor. In particular, the first reaction zone and the final reaction zone are only separated by a single wall comprising the opening. Thus, a simple reactor construction is provided that allows for the regeneration of acids and for the recovery of very pure metal oxides.

According to a preferred embodiment of the present invention, metal oxides are sized and pushed from the first reaction zone into the second reaction zone by using a first rake element disposed in the first heating zone.

According to the present invention, it is thereby advantageously possible to produce metal oxides with uniform sizes and shapes such that the further processing is enhanced.

### BRIEF DESCRIPTION OF THE DRAWINGS

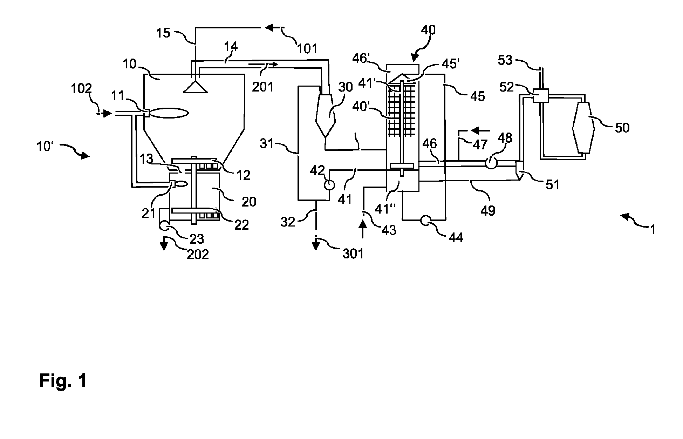

Figure 1 illustrates schematically an acid recovery apparatus for recovering acids from a spent acid solution containing metal salts.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

**Figure 1** shows an acid regeneration apparatus 1 for recovering acids from metal ferrous solutions of acids or spent acids containing HNO₃, and preferably also HF, Fe, Cr, Ni compounds or mixtures of these compounds, by evaporation and pyrolytic decomposition into acids and metal oxides. The spent acids are fed into the reactor inlet pipe 15 - as illustrated by the arrow 101 - and fed into a first reaction zone 10 of the reactor 10'.

The spent acid is preferably atomized by a nozzle at the top of the first reaction zone 10 such that small droplets of spent acid are generated within the first reaction zone 10. The first reaction zone 10 comprises a first heating element 11, preferably 4-6 heating elements, configured to heat up the first reaction zone 10 to a first temperature sufficient for the evaporation and decomposition of the spent acids into acid vapour and metal oxides. Preferably, the first reaction zone 10 is heated up to a first temperature between 250 °C and 650 °C, more preferably to 650 °C. Upon spraying the spent acid into the first reaction zone 10 the atomized liquid spray is heated by the heating element 11 and exhaust vapours, in particular comprising water vapour, acid vapour and/or other vapours - which are hereinafter also called exhaust gases - are carried away through the reactor exhaust pipe 14 disposed at the top of the first reaction zone 10. The heat of the first temperature in the first reaction zone 10 causes the decomposition of the spent acid into acid vapour and metal compounds and also simultaneously causes metal oxides to form particles that fall to the bottom of the first reaction zone of the reactor 10'. In particular, the liquid spray of spent acid is evaporated and decomposed into acid vapour and metal oxides in a single step by heating the liquid spray with the first heating element 11.

The metal oxide particles are sized and pushed from the first heating zone 10 by, in particular rotating, a first rake element 12 disposed at the bottom of the first heating zone 10 through an opening 13 into a second reaction zone 20 of the reactor 10'. The first reacting zone 10 and the second reaction zone 20 are formed as an integral part of the reactor 10' and the opening 13 is located at the bottom of the first reaction zone 10 and the top of the second reaction zone 20 of the reactor 10'. The second reaction zone 20 is herein also called final reaction zone 20. The metal oxide particles are then subject to a second heating zone 20 before being raked by a second rake element 22 disposed at the bottom of the second reaction zone 20 and/or before being discharged, cooled and/or further processed through a lock 23.

The final reaction zone 20 comprises a second heating element 21, preferably 2-4 heating elements 21, for heating the final reaction zone 20 to the second temperature, wherein the second temperature is lower, preferably by at least 50 °C, than the first temperature of the first reaction zone 10 of the reactor 10'. Preferably the second temperature is between 400 °C and 500 °C, more preferably the second temperature is 430 °C. Preferably the first heating elements 11 and the second heating elements 21 are operated with air provided by an air supply and fuel or gas provided by a fuel supply as indicated by arrow 102. The final reaction in the final reaction zone 20 is an oxidation, preferably at a retention time of less than ten minutes. During the oxidation in the final reaction zone 20 residual acids bonded to the metal salt is removed such that the oxide is free of residual acids.

The exhaust vapours are discharged from the first reaction zone 10 of the reactor 10' through the reactor exhaust pipe 14 in order to feed a jet or Venturi scrubber 30 to treat the exhaust vapours. Further, the Venturi scrubber 30 is fed by a liquid to cool the exhaust vapours and/or to remove dust particles and/or to remove some specific vapours of the exhaust vapours. Preferably, the regenerated acid is used as the liquid fed into the Venturi scrubber through the scrubber inlet pipe 31 connected to an absorption column 40 of the acid regeneration apparatus 1.

The exhaust vapours from the first reaction zone 10 are passed through the Venturi scrubber 30 to an acid absorption column 40, wherein in the absorption column 40 the acid is absorbed from the exhaust vapours to produce regenerated acid from the exhaust vapours. In particular, the remaining acid is thereby adiabatically absorbed from the exhaust vapour in the absorption column 40. A first partial stream of regenerated acid is pumped from the absorption column 40 by a collecting pump 42 through a collecting pipe 41 to the scrubber inlet pipe 31 into the Venturi scrubber 30. A second partial stream of regenerated acid is discharged through an acid stream outlet pipe 32 for subsequent use in the pickling process.

Additionally, the absorption column 40 is configured for both, absorption acids from the exhaust vapours and scrubbing the exhaust vapours. The exhaust vapours passed through the Venturi scrubber 30 to the absorption column 40 is directed into an absorption chamber of the absorption column 40, which is configured for the absorption of the acids from the exhaust vapours. The exhaust vapours flow upwards through a filling material 40' disposed in the absorption column into gas chamber 46' in a top region of the absorption column 40. An absorption liquid, for example regenerated liquid and/or water, is fed through absorption liquid pipe 45 to a spray nozzle 45' in the gas chamber 46'. The absorption liquid is sprayed across a cross section of the top of the filling material 40' and downwardly flows through the filling material 40' until it reaches the absorption chamber above the collecting volume 41" in the lower region of the absorption column 40. The collecting volume 41" is provided as a reservoir for the absorption column 40 and the washing circuit. A hollow wash column 41' is disposed in the absorption column 40 connecting the gas chamber 46' with the collecting volume 41 ". A washing liquid sprayed through a nozzle above the top open end of the wash column 41' mixes with the exhaust vapours coming from the absorption region through the filling material 40' and which are redirected from gas chamber 46' downwardly into the wash column 41'. In this way, the droplets generated by the nozzle 45' wash away further particles or vapours from the exhaust vapour. The collected wash liquid is discharged from collection chamber 41" through the collecting pipe 41.

The exhaust vapours are discharged from the absorption column 40 through gas discharge pipe 46 and fan 48 into the separator 51, wherein the separator is used for removing any water droplets or particulate matter. The exhaust vapours are then directed from the separator 51 to a heat exchanger 52 to a catalytic treatment column 50. The exhaust vapours from the catalytic treatment column 50 are again directed through the heat exchanger 52 to a discharge stack 53. Preferably, water is fed through a wash water inlet pipe 47 into the gas discharge pipe 46 in order to achieve further scrubbing of the remaining exhaust vapours. The water separated from the remaining exhaust vapours in the separator 51 is redirected via a separator pipe 49 into the collecting volume 41" and is used as absorption liquid for the absorption column 40. Thus, it is advantageously possible to operate the regenerating apparatus free from waste water. By controlling the amount of wash liquid it is advantageously possible to adjust the concentration of acid in the regenerated acid.

**REFERENCE SIGNS**

| | |
|---|---|
| 1 | acid regeneration apparatus |
| 10' | reactor |
| 10 | first reaction zone |
| 11 | first heating element |
| 12 | first rake element |
| 13 | opening |
| 14 | reactor exhaust pipe |
| 15 | reactor inlet pipe |
| 20 | final reaction zone |
| 21 | second heating element |
| 22 | second rake element |
| 23 | lock |
| 30 | venturi scrubber |
| 31 | scrubber inlet pipe |
| 32 | acid stream outlet pipe |
| 40 | absorption column |
| 40' | absorption bed |
| 41 | collecting pipe |
| 41' | wash column |
| 41" | collecting volume |
| 42 | collecting pump |
| 43 | wash water inlet pipe |
| 44 | absorption liquid pump |
| 45 | absorption liquid pipe |
| 45' | nozzle |
| 46 | gas discharge pipe |
| 46' | gas chamber |
| 47 | wash water inlet pipe |
| 48 | fan |
| 49 | separator pipe |
| 50 | catalytic treatment column |
| 51 | separator |
| 52 | heat exchanger |
| 53 | discharge stack |
| 101 | supply for spent acid solution |
| 102 | fuel supply |
| 201 | acid vapour outlet |
| 202 | metal oxide outlet |
| 301 | regenerated acid outlet |

## Claims

1. Process for recovering acids from a spent acid solution containing metal salts, the process comprising the steps of:
- - providing a heated reactor (10') which is split, by built-in parts, into a first reaction zone (10) and a separate second reaction zone (20) immediately adjoining the first reaction zone (10),
- - feeding the spent acid solution into the first reaction zone (10) of the reactor,
- - heating the spent acid solution in the first reaction zone (10) at a first temperature sufficient for evaporation of the water from the acid solution and for pyrolytic decomposition into acid vapours and metal oxides, wherein a reaction takes place in the first reaction zone (10) at the first temperature, wherein the first temperature is between 250 °C and 650°C, wherein a final reaction takes place in the second reaction zone (20) at a second temperature, wherein the second temperature is lower than the first temperature,
- - recovering and regenerating an acid solution from the acid vapours.

2. Process according to claim 1, **characterized in that** the first temperature in the first reaction zone (10) is 650 °C.

3. Process according to one of the preceding claims, **characterized in that** the second temperature in the final reaction zone (20) is between 400 °C and 500 °C.

4. Process according to one of the preceding claims, **characterized in that** the second temperature in the final reaction zone (20) is 430 °C.

5. Process according to one of the preceding claims, **characterized in that** the second temperature in the second reaction zone (20) is at least 50 °C lower than the first temperature in the first reaction zone (10).

6. Process according to one of the preceding claims, **characterized in that** the final reaction in the second reaction zone (20) is an oxidation at a retention time of less than ten minutes.

7. Process according to claim 6, **characterized in that** the process comprises the further step of:
- - feeding the acid vapour from the first reaction zone (10) to an acid absorption column (40) and absorbing the acid vapour to produce regenerated acid.

8. Process according to claim 7, **characterized in that** the acid vapour is adiabatically absorbed in the absorption column (40).

9. Process according to claim 7 or 8, **characterized in that** acid vapour fed into the absorption column (40) is scrubbed in the absorption column (40) by feeding water into the absorption column (40).

10. Process according to claim 9, **characterized in that** waste water is recovered from the absorption column (40) and fed back into the absorption column (40) for scrubbing the acid vapours.

11. Process according to one of the preceding claims, **characterized by** feeding metal oxides from the first reaction zone (10) through an opening (13) into the second reaction zone (20).

12. Process according to one of the preceding claims, **characterized by** sizing and pushing metal oxides from the first reaction zone (10) into the second reaction zone (20) by using a first rake element (12) disposed in the first heating zone (10).
